# EUROPÄISCHE PATENTANMELDUNG

(11) **EP 4 674 595 A1**
(43) Veröffentlichungstag der Anmeldung: **07.01.2026**
(21) Anmeldenummer: 25185524.3
(22) Anmeldetag: 26.06.2025
(51) Int. Cl.: B29C 49/42, B29C 49/06, B29C 49/78, B29L 31/00

(54) **VORRICHTUNG UND VERFAHREN ZUR CHARGENTRENNUNG VON TRANSPORTIERTEN KUNSTSTOFFVORFORMLINGEN**

(30) Priorität: 02.07.2024 DE 102024118666
(71) Anmelder: Krones AG, 93073 Neutraubling (DE)
(72) Erfinder: Forsthoevel, Jochen, 93073 Neutraubling (DE); Wuensche, Dieter, 93073 Neutraubling (DE); Sigler, Markus, 93073 Neutraubling (DE); Eckl, Johann, 93073 Neutraubling (DE)
(74) Vertreter: Bittner, Bernhard

(57) **Zusammenfassung**

Vorrichtung (1) zum Behandeln von Kunststoffvorformlingen (10) mit einer Aufnahmeeinrichtung (2), welche zur Aufnahme einer Vielzahl von Kunststoffvorformlingen (10) geeignet und bestimmt ist, mit einer ersten Transporteinrichtung (4), welche die Kunststoffvorformlinge von der Aufnahmeeinrichtung (2) abführt und in einer vorgegebenen Transportrichtung transportiert und mit einer zweiten Transporteinrichtung (6), welche in der Transportrichtung nach der ersten Transporteinrichtung (4) angeordnet ist und welche dazu geeignet und bestimmt ist, die Kunststoffvorformlinge (10) in der Transportrichtung zu transportieren, dadurch gekennzeichnet, dass der Transport der Kunststoffvorformlinge (10) durch die erste Transporteinrichtung (4) unabhängig von dem Transport der Kunststoffvorformlinge (10) durch die zweite Transporteinrichtung (6) steuerbar ist.

## Beschreibung

Die vorliegende Erfindung bezieht sich auf eine Vorrichtung und ein Verfahren zum Behandeln von Kunststoffvorformlingen. Aus dem Stand der Technik ist es seit langem bekannt, dass Kunststoffvorformlinge in einem Ofen erwärmt werden und anschließend von einer Umformungseinrichtung wie insbesondere einer Streckblasmaschine zu Kunststoffbehältnissen umgeformt werden. Dabei ist es auch bekannt, dass in dem Ofen unterschiedliche Kunststoffvorformlinge erwärmt werden, beispielsweise solche, die sich in ihren Abmessungen unterscheiden.

Zusätzlich ist es bekannt geworden, Kunststoffvorformlinge mit unterschiedlichen Bestandteilen wie zum Beispiel unterschiedlichen Recyclatanteilen einzusetzen. Dabei werden bei aus dem Stand der Technik bekannten Zuführungen für derartige Kunststoffvorformlinge unterschiedliche Chargen an Kunststoffvorformlingen üblicherweise beim Handling und beim Transport der Kunststoffvorformlinge und/oder der Sortierung nicht getrennt und es findet so eine Vermischung statt. Diese Vermischung bewirkt, dass im Herstellungsprozess sämtliche (also auch unterschiedliche) Kunststoffvorformlinge in gleicher Weise behandelt werden, beispielsweise in gleicher Weise erwärmt werden.

Dies kann sich negativ auf die Qualität der entstehenden Behältnisse auswirken. Aus dem Stand der Technik ist es daher bekannt, um für eine Trennung der Chargen oder Qualitäten zu sorgen, zuerst das System komplett leer zu fahren und anschließend mit der nächsten Charge zu befüllen. Dieser Vorgang ist jedoch sehr zeitaufwendig.

Für Kunststoffvorformlinge mit unterschiedlichen Geometrien, Massen oder Farben war das bisherige Vorgehen ausreichend, da parallel zum Chargenwechsel auch an den Folgemaschinen in der Regel Einstellungen und Umrüstungen vorgenommen werden müssen.

Die Verarbeitung von Kunststoffvorformlingsmaterial mit hohem Recyclatanteil führt zu vergleichsweise starken Schwankungen der Materialeigenschaften der Kunststoffvorformlinge im Vergleich zu einer hohen Konstanz bei der Verwendung von Neumaterial.

Werden nun Chargen mit abweichenden Materialeigenschaften vermischt der Blasmaschine zugeführt, ist diese nicht in der Lage, eine gleichbleibende Qualität der Behältnisse herzustellen, da sowohl die integrierten automatischen Regelsysteme als auch die Bauart der Maschine eine hochdynamische Regelung nicht zulassen. Die Folge sind nicht eingehaltene Spezifikationen der Behältnisse oder beispielsweise Flaschenplatzer in der Blasmaschine.

Der vorliegenden Erfindung liegt daher die Aufgabe zugrunde, eine Vorrichtung und ein Verfahren zur Verfügung zu stellen, welche eine gleichbleibende Qualität der hergestellten Behältnisse ermöglichen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Behandeln und insbesondere zum Transportieren von Kunststoffvorformlingen weist eine Aufnahmeeinrichtung auf, welche zur Aufnahme einer Vielzahl von Kunststoffvorformlingen geeignet und bestimmt ist. Daneben weist die Vorrichtung eine erste Transporteinrichtung auf, welche die Kunststoffvorformlinge von der Aufnahmeeinrichtung abführt oder wegführt und in einer vorgegebenen Transportrichtung transportiert. Dabei ist es möglich, dass sich diese erste Transporteinrichtung unmittelbar an die Aufnahmeeinrichtung anschließt, es wäre jedoch auch denkbar, dass zwischen der Aufnahmeeinrichtung und der ersten Transporteinrichtungen weitere Einrichtungen wie insbesondere Überführungseinrichtungen angeordnet sind. Insbesondere kann es sich bei einer solchen Überführungseinrichtung um einen sog. Hochförderer handeln, der bevorzugt die Kunststoffvorformlinge zumindest auch in einer vertikalen bzw. schrägen Richtung nach oben transportiert.

Es wäre jedoch auch möglich, die Kunststoffvorformlinge von der Aufnahmeeinrichtung direkt an die erste Transporteinrichtung zu übergeben. Bei der ersten Transporteinrichtung handelt es sich beispielsweise um ein Transportband.

Daneben ist eine zweite Transporteinrichtung vorgesehen, welche in der Transportrichtung (der Kunststoffvorformlinge) nach der ersten Transporteinrichtung angeordnet ist, und welche dazu geeignet und bestimmt ist, die Kunststoffvorformlinge in der Transportrichtung zu transportieren.

Dabei ist bevorzugt diese zweite Transporteinrichtung unmittelbar nach der ersten Transporteinrichtung angeordnet, es wäre jedoch auch möglich, dass zwischen der ersten Transporteinrichtung und der zweiten Transporteinrichtungen eine Überführungseinrichtung vorgesehen ist, welche die Kunststoffvorformlinge von der ersten Transporteinrichtung an die zweite Transporteinrichtung überführt.

Erfindungsgemäß ist der Transport der Kunststoffvorformlinge durch die erste Transporteinrichtung unabhängig von dem Transport der Kunststoffvorformlinge durch die zweite Transporteinrichtung steuerbar und/oder durchführbar.

Im Stand der Technik sind derartige Transporteinrichtungen üblicherweise aufeinander synchronisiert und/oder miteinander gekoppelt. Im Rahmen der Erfindung wird jedoch eine unabhängige Steuerung der Transporteinrichtungen vorgeschlagen, insbesondere um eine effiziente Trennung einzelner Chargen an Kunststoffvorformlingen zu ermöglichen.

Besonders bevorzugt weist die erste Transporteinrichtung eine erste Antriebseinrichtung, insbesondere in Form eines Elektromotors und insbesondere in Form eines Servomotors auf. Besonders bevorzugt weist die zweite Transporteinrichtung eine zweite Antriebseinrichtung ebenfalls bevorzugt in Form eines Elektromotors und insbesondere eines Servomotors auf.

Besonders bevorzugt sind die erste Antriebseinrichtung und die zweite Antriebseinrichtung unabhängig voneinander steuerbar und bevorzugt unabhängig voneinander regelbar.

Bei einer weiteren vorteilhaften Ausführungsform ist die Aufnahmeeinrichtung ein Reservoir zum Aufnehmen von Kunststoffvorformlingen oder eine Transporteinheit zum Transportieren von Kunststoffvorformlingen. So ist es beispielsweise möglich, aus dem Behältnis (etwa einem sog. Oktabin) die Kunststoffvorformlinge unmittelbar auf eine Transporteinrichtung zu schütten, oder auch in das genannte (insbesondere stationäre) Reservoir bzw. die Aufnahmeeinrichtung.

Besonders bevorzugt handelt es bei wenigstens einer der Transporteinrichtungen um eine solche Transporteinrichtung, welche zur Aufnahme einer Vielzahl von Kunststoffvorformlingen und insbesondere auch zur Aufnahme einer Vielzahl von nicht orientiert angeordneten Kunststoffvorformlingen oder beliebig orientierten Kunststoffvorformlingen geeignet und bestimmt ist.

Bei einer weiteren bevorzugten Ausführungsform transportiert wenigstens eine der Transporteinrichtungen die Kunststoffvorformlinge geradlinig und/oder ist hierzu geeignet. Bevorzugt transportieren beide Transporteinrichtungen die Kunststoffvorformlinge jeweils geradlinig oder sind hierzu geeignet.

Besonders bevorzugt handelt es sich bei wenigstens einer der Transporteinrichtungen um ein Transportband und/oder eine Transportkette. Besonders bevorzugt handelt es sich bei beiden Transporteinrichtungen jeweils um Transportbänder oder Transportketten. Bevorzugt weisen die Transporteinrichtungen Seitenführungen auf, welche insbesondere ein seitliches Herabfallen der Kunststoffvorformlinge von den Transporteinrichtungen verhindern.

Bei einer weiteren vorteilhaften Ausführungsform weist die Vorrichtung eine Sortiereinrichtung auf, welche dazu geeignet und bestimmt ist, die ihr zugeführten Kunststoffvorformlinge zu sortieren und insbesondere gleichartig auszurichten. Damit wird unter der Sortierung insbesondere eine Sortierung hinsichtlich einer Ausrichtung verstanden.

Bei einer weiteren vorteilhaften Ausführungsform weist die Vorrichtung eine Eintakteinrichtung auf, welche die Kunststoffvorformlinge transportiert und wenigstens abschnittsweise eine gleichbleibende Teilung zwischen transportierten Kunststoffvorformlingen erzeugt. Insbesondere handelt es sich bei der Eintakteinrichtung um einen sogenannten Eintaktstern. An diesen werden die Kunststoffvorformlinge zugeführt und üblicherweise weist dieser Eintaktstern eine Vielzahl von Ausnehmungen auf, die jeweils zur Aufnahme eines einzelnen Kunststoffvorformlings geeignet und bestimmt sind.

Besonders bevorzugt schließt sich an diesen Eintaktstern oder diese Eintakteinrichtung eine Erwärmungseinrichtung zum Erwärmen der Kunststoffvorformlinge an.

Bei einer weiteren vorteilhaften Ausführungsform weist die Vorrichtung eine Herstellungseinrichtung zum Herstellen von Kunststoffvorformlingen auf. Insbesondere handelt es sich dabei um eine sogenannte Spritzgussmaschine.

Besonders bevorzugt handelt es sich bei der Erwärmungseinrichtung einen Infrarotofen, einen Mikrowellenofen oder einen Laserofen. Diese Erwärmungseinrichtung weist bevorzugt eine weitere Transporteinrichtung auf, welche die Kunststoffvorformlinge während ihrer Erwärmung transportiert. Besonders bevorzugt weist die Erwärmungseinrichtung auch eine Dreheinrichtung auf, welche die Kunststoffvorformlinge wenigstens zeitweise während ihrer Erwärmung bezüglich ihrer Längsrichtung dreht, um auf diese Weise eine gleichförmige Erwärmung der Kunststoffvorformlinge zu erreichen.

Besonders bevorzugt weist die Vorrichtung eine Umformungseinrichtung auf, welche dazu geeignet und bestimmt ist, die erwärmten Kunststoffvorformlinge zu Kunststoffbehältnissen und insbesondere zu Kunststoffflaschen umzuformen. Besonders bevorzugt handelt es sich bei dieser Umformungseinrichtung um eine Streckblasmaschine.

Bei einer weiteren vorteilhaften Ausführungsform ist die Sortiereinrichtung in der Transporteinrichtung der Kunststoffvorformlinge wenigstens nach der ersten Transporteinrichtung und bevorzugt nach der ersten und der zweiten Transporteinrichtung angeordnet.

Bei einer weiteren vorteilhaften Ausführungsform weist die Sortiereinrichtung zwei parallel zueinander angeordnete Rollen auf, welche sich insbesondere in der Transportrichtung erstrecken und zwischen diesen Rollen wird bzw. ist ein Spalt ausgebildet, durch welchen ein Grundkörper der Kunststoffvorformlinge treten kann, nicht aber Ein Mündungsbereich der Kunststoffvorformlinge und insbesondere nicht ein Tragring der Kunststoffvorformlinge. Besonders bevorzugt drehen sich diese beiden Rollen entgegengesetzt zueinander.

Es wird daher eine Neugestaltung der logistischen Abläufe in der Kunststoffvorformlings - Zuführung vorgeschlagen. Auf diese Weise kann eine Vermischung der Kunststoffvorformlinge aus unterschiedlichen Behältnissen beispielsweise Oktabins im Handlings- und Transportbereich und insbesondere auch bei einer laufenden Produktion vollständig vermieden werden.

Lediglich im Bereich der eigentlichen Sortierung kann eine kurzzeitige Vermischung gegebenenfalls nicht vermieden werden, ohne das Risiko von Mikrostopps an der Umformungseinrichtung einzugehen.

Zur technischen Umsetzung ist es vorteilhaft, die Transporteure bzw. die Transporteinrichtungen der Zuführung einzeln anzusteuern. Zu diesem Zweck können beispielsweise Frequenzumrichter vorgesehen sein. Bevorzugt ist jeder Transporteinrichtung und insbesondere der Antriebseinrichtung jeder Transporteinrichtung ein Frequenzumrichter zugeordnet.

Daneben wird bevorzugt die Beladefunktion (mittels einer Logik) von einer Aufnahmeeinrichtung und der Sortiereinrichtung angepasst und es wird besonders bevorzugt auch eine Funktionalität einer Rückführeinrichtung beispielsweise an der Sortiereinrichtung geändert.

Die vorliegende Erfindung erlaubt es, in der Zuführung der Kunststoffvorformlinge mit einem vertretbaren Aufwand kleinste Mengen, beispielsweise von Oktabins zugeführten Kunststoffvorformlingen chargenweise zu transportieren und bevorzugt auch nahezu chargenrein zu sortieren. Auf diese Weise wird eine Grundvoraussetzung geschaffen, um mit der Blasmaschine und den bekannten bzw. aktuell in Entwicklung befindlichen Regelmechanismen eine gleichbleibende Behältnisqualität auch bei wechselnden Eigenschaften der Kunststoffvorformlinge zu erreichen.

Bei einer weiteren bevorzugten Ausführungsform weist die Vorrichtung wenigstens eine Erfassungseinrichtung auf, welche dazu geeignet und bestimmt ist, wenigstens eine Eigenschaft zu erfassen, welche für von wenigstens einer der Transporteinrichtungen transportierte Kunststoffvorformlinge charakteristisch ist.

Bevorzugt ist diese Eigenschaft aus einer Gruppe von Eigenschaften ausgewählt, welche eine Orientierung der Kunststoffvorformlinge, eine Anzahl der transportierten Kunststoffvorformlinge, eine Belegungsdichte der transportierten Kunststoffvorformlinge, Abstände zwischen transportierten Kunststoffvorformlinge, eine Gattung der Kunststoffvorformlinge und dergleichen enthält.

Besonders bevorzugt ist jeder Transporteinrichtung wenigstens eine Erfassungseinrichtung zugeordnet.

Besonders bevorzugt handelt es sich bei wenigstens eine Erfassungseinrichtung um eine Lichtschrankeneinrichtung.

Besonders bevorzugt weist die Vorrichtung eine Steuerungseinrichtung auf, welche den Transport der Kunststoffvorformlinge mittels der ersten Transporteinrichtung und der zweiten Transporteinrichtung steuert. Bevorzugt ist diese Steuerungseinrichtung dazu geeignet und bestimmt, den Transport basierend auf wenigstens einem von wenigstens einer Erfassungseinrichtung erfassten Wert und insbesondere auf Basis von mehreren von mehreren Erfassungseinrichtung erfassten Werten zu steuern. Insbesondere sind dabei diese Werte für einen Belegungszustand der Transporteinrichtungen mit den Kunststoffvorformlingen charakteristisch.

Es ist jedoch auch möglich, dass einer oder mehreren Transporteinrichtungen mehrere Lichtschranken zugeordnet sind.

Bei einer weiteren vorteilhaften Ausführungsform weist die Vorrichtung eine Rückführungseinrichtung auf, welche dazu geeignet und bestimmt ist, wenigstens einen Anteil der Kunststoffvorformlinge und insbesondere von einer Ausschleuseeinrichtung ausgeschlossene Kunststoffvorformlinge dem Transportpfad der Kunststoffvorformlinge insbesondere stromaufwärts eines Entnahmepunkts wieder zuzuführen.

Besonders bevorzugt weist daher die Vorrichtung und insbesondere die Sortiereinrichtung eine Ausschleuseeinrichtung auf, welche dazu geeignet und bestimmt ist, einzelne Kunststoffvorformlinge aus dem Transportpfad auszuschleusen, beispielsweise herauszuschlagen. Hierbei kann es sich beispielsweise um fehlerhaft orientierte Kunststoffvorformlinge handeln. Besonders bevorzugt ist diese Ausschlusseinrichtung in oder nach der Sortiereinrichtung angeordnet.

Besonders bevorzugt ist die Rückführungseinrichtung dazu geeignet und bestimmt, solche Kunststoffvorformlinge wieder der Sortiereinrichtung zuzuführen.

Bei einer weiteren vorteilhaften Ausführungsform weist die Vorrichtung weist eine Steuerungseinrichtung auf, welche die Rückführungseinrichtung und/oder die Transporteinrichtungen derart steuern kann, insbesondere derart, dass die rückgeführten Kunststoffvorformlinge einer vorbestimmten und/oder der richtigen Charge (insbesondere eine Chargen mit der gleichen Materialeigenschaft) zugeführt werden.

Bei einer weiteren bevorzugten Ausführungsform weist die Vorrichtung wenigstens eine Sensoreinrichtung auf, welche dazu geeignet und bestimmt ist, eine Gattung von Kunststoffvorformlingen zu identifizieren. Bevorzugt unterscheiden sich hier zwei unterschiedliche Gattungen an Kunststoffvorformlingen in wenigstens einer physikalischen Eigenschaft, beispielsweise einem Recyclatanteil.

Entsprechend kann die Vorrichtung wie etwa eine Umformungseinrichtung gesteuert werden. Insbesondere können aber auch die Antriebe der besagten Transporteinrichtungen in Abhängigkeit von dieser Eigenschaft gesteuert werden.

Es wird daher eine Trennung von Chargen an Kunststoffvorformlingen, insbesondere wegen einer abweichenden Verarbeitung in einer Blasmaschine vorgeschlagen. Bei einer großvolumigen Vermischung von Chargen an Kunststoffvorformlingen können stark abweichende physikalische Eigenschaften der Kunststoffvorformlinge nicht durch die in der Blasmaschine verfügbaren Regelmechanismen kompensiert werden. Dies führt zu einer abweichenden Flaschenqualität. Die im Rahmen der Erfindung vorgeschlagene Chargentrennung führt zu einer gleichbleibenden Behältnisqualität und die Regelung der Blasmaschine kann je nach Charge den Prozess ansteuern. Es wird aber davon ausgegangen, dass die kleinste Charge beispielsweise ein sogenanntes Oktabin ist.

Vorrichtungsseitig ist vorteilhaft bei der Zuführung der Kunststoffvorformlinge eine Ausstattung mit einer Überwachung der Transporteinrichtungen beispielsweise einer Bänderüberwachung vorgesehen. Besonders bevorzugt sind, wie oben erwähnt die einzelnen Bandantriebe einzeln ansteuerbar.

Besonders bevorzugt weist die erste Transporteinrichtung eine Transportlänge auf, welche zumindest ähnlich einer Transportlänge der zweiten Transporteinrichtung ist. Besonders bevorzugt weichen die Längen der Transporteinrichtungen bzw. die Transportwege, welche die Kunststoffvorformlinge auf den Transporteinrichtungen zurückliegen voneinander um nicht mehr als 30 % bevorzugt um nicht mehr als 20 % und bevorzugt, um nicht mehr als 10 % ab.

Bevorzugt sind die Vorrichtungen mit wenigstens zwei Transporteinrichtungen, bei denen sich insbesondere um zwei Transportbänder handelt, ausgeführt.

Es wird daher vorgeschlagen, dass bei einer Vorrichtung mit Chargentrennung ein Austausch von Zufuhrbehältnissen wie beispielsweise Oktabins effektiv und gezielt erfolgt. Dies kann beispielsweise mittels AGVs erfolgen (automated guided vehicle.) Bei einer Anforderung zu einem Kippvorgang ist, bevorzugt das Silo oder eine Aufnahmeeinrichtung bereits leer. Verzögerungen erhöhen das Risiko von Produktionsstopps, die ebenfalls nicht gewünscht sind.

Bei einer weiteren bevorzugten Ausführungsform wäre es auch möglich, derartige Zuführeinrichtungen oder Kippeinrichtungen mit einem vorgelagerten Palettentransport auszustatten.

Die vorliegende Erfindung ist weiterhin auf ein Verfahren zum Behandeln und insbesondere zum Transportieren von Kunststoffvorformlingen und insbesondere zum Transportieren von Kunststoffvorformlingen zu einer Erwärmungseinrichtung gerichtet, wobei eine Vielzahl von Kunststoffvorformlingen zu einer Aufnahmeeinrichtung verbracht wird oder verbracht werden (bzw. gebracht wird oder werden), welche zur Aufnahme einer Vielzahl von Kunststoffvorformlingen geeignet und bestimmt ist.

Weiterhin transportiert eine erste Transporteinrichtung die Kunststoffvorformlinge und/oder von der Aufnahmeeinrichtung ab und transportiert sie in einer vorgegebenen Transportrichtung. Weiterhin transportiert eine zweite Transporteinrichtung, welche in der Transporteinrichtung nach der ersten Transporteinrichtung angeordnet ist und welche sich insbesondere unmittelbar an die erste Transporteinrichtung anschließt die Kunststoffvorformlinge ebenfalls in der oder in einer Transportrichtung.

Erfindungsgemäß wird der Transport der Kunststoffvorformlinge durch die erste Transporteinrichtung wenigstens zeitweise unabhängig von dem Transport der Kunststoffvorformenlinge durch die zweite Transporteinrichtung gesteuert.

Besonders bevorzugt ist wenigstens zeitweise eine Transportgeschwindigkeit, mit der die erste Transporteinrichtung die Kunststoffvorformlinge transportiert unterschiedlich bezüglich einer Geschwindigkeit, mit der die zweite Transporteinrichtung die Kunststoffvorformlinge transportiert.

Besonders bevorzugt wird wenigstens zeitweise eine Transporteinrichtung wenigstens zeitweise angehalten, während sich die jeweils andere Transporteinrichtung bewegt. Besonders bevorzugt wird durch diese unterschiedliche Steuerung und insbesondere durch unterschiedliche Bewegungsgeschwindigkeiten der Transporteinrichtungen eine Trennung von unterschiedlichen Chargen der Kunststoffvorformlinge ermöglicht.

Besonders bevorzugt werden von den Transportporteinrichtungen wenigstens zeitweise wenigstens zwei unterschiedliche Chargen an Kunststoffvorformlingen transportiert. Bevorzugt wird, insbesondere durch eine entsprechende Ansteuerung der Transporteinrichtungen eine Lücke zwischen diesen beiden von den Transporteinrichtungen transportierten Chargen erzeugt, vergrößert oder verkleinert. Es ist auch möglich die Größe der Lücke über den kompletten Transport konstant zu halten.

Bei einer weiteren bevorzugten Ausführungsform werden die Kunststoffvorformlinge sortiert und insbesondere gleichartig ausgerichtet. Besonders bevorzugt erfolgt dabei dieses Sortieren oder Ausrichten nach dem Transport der Kunststoffvorformlinge mit wenigstens einer, der Transporteinrichtungen und besonders bevorzugt nach dem Transport der Kunststoffvorformlinge mittels beider Transporteinrichtungen.

Bei einem weiteren bevorzugten Verfahren wird teilweise eine Rückführung von Kunststoffvorformlingen durchgeführt. Dabei werden besonders bevorzugt Kunststoffvorformlinge von einem Bereich oder einem Abschnitt, der in der Transportrichtung nach der Sortiereinrichtung liegt zu einem Bereich oder Abschnitt der in der Transportrichtung früher angeordnet ist und insbesondere vor der Sortiereinrichtung liegt, transportiert.

Besonders bevorzugt werden solche Kunststoffvorformlinge rückgeführt, welche insbesondere in einem Bereich der Sortiereinrichtung aus dem Transportpfad aus geschleust wurden. Besonders bevorzugt werden solche Kunststoffvorformlinge aussortiert, welche nicht von einer vorgegebenen Weise ausgerichtet oder sortiert wurden.

Besonders bevorzugt erfolgt wenigstens teilweise ein Ausschleusen von Kunststoffvorformlingen. Besonders bevorzugt werden ausgeschleuste Kunststoffvorformlinge stromaufwärts der Sortiereinrichtung wieder dem Transportpfad zugeführt.

Bei einem weiteren bevorzugten Verfahren wird eine Lücke zwischen den Kunststoffvorformlingen in einer ersten Gattung und den Kunststoffvorformlingen und einer zweiten Gattung von Kunststoffvorformlingen gebildet. Durch diese Lücke wird bevorzugt ein chargenreiner Transport oder eine chargenreine Behandlung der Kunststoffvorformlinge erreicht.

Besonders bevorzugt wird diese Lücke durch die oben erwähnte unterschiedliche Ansteuerung der Transporteinrichtungen bewirkt. Insbesondere handelt es sich bei einer Transporteinrichtung insbesondere bei beiden Transporteinrichtungen um ein Transportband bzw. Transportbänder oder Transportketten.

Ein wesentlicher Aspekt der Erfindung besteht also darin, eine Vermischung der Kunststoffvorformlinge aus unterschiedlichen Zuführbehältnissen (insbesondere sog. Oktabins) während dem laufenden Betrieb zu vermeiden. Dafür sind vor der Sortiereinrichtung, insbesondere einem Rollensortierer mindestens zwei Transporteinrichtungen vorgesehen, wobei die Transporteinrichtungen individuell angesteuert werden können.

Wie oben erwähnt, erfolgt bevorzugt ein Messen eines Beladungszustand bzw. Belegungszustandes auf den Transporteinrichtungen insbesondere mittels Sensorik (z.B. Lichtschranken). und ein Zuführen der neuen Charge, sodass eine Lücke zwischen den Chargen gehalten wird und so keine Vermischung stattfindet.

Bevorzugt ist, wie erwähnt, eine Rückführungseinrichtung, insbesondere in Form eines intelligenten Rückführbandes vorgesehen. Diese Rückführungseinrichtung ist insbesondere an der Sortiereinrichtung und insbesondere an einem Rollensortierer vorgesehen. Bevorzugt ist daher diese Rückführungseinrichtung dazu geeignet und bestimmt, die Kunststoffvorformlinge entgegengesetzt zu der Sortiereinrichtung zu transportieren.

Wenn Kunststoffvorformlinge aus dem Rollensortierer ausgeschleust werden, werden diese über die Rückführungseinrichtung, insbesondere ein Rückführband wieder dem Rollensortierer zugeführt.

Bevorzugt weist die Vorrichtung daher eine Ausschleuseeinrichtung auf, welche dazu geeignet und bestimmt ist, einzelne Kunststoffvorformlinge aus dem Transportpfad der Kunststoffvorformlinge auszuschleusen. Bevorzugt ist diese Ausschleuseeinrichtung der Sortiereinrichtung zugeordnet.

Die Rückführung erfolgt bevorzugt derart, dass keine Vermischung mit der neuen Charge stattfindet. Zu diesem Zweck kann auch in der Rückführungseinrichtung eine Lücke in dem (Rückführungs)strom der Kunststoffvorformlinge erzeugt werden.

Vorteilhaft kann eine automatische Anlieferung von neuen Zuführbehältnissen (insb. Oktabins) erfolgen. Zu diesem Zweck können beispielsweise Roboter oder AGVs vorgesehen sein.

Sobald eine neue Charge am Einlaufstern bzw. der oben erwähnten Eintakteinrichtung zum Ofen angekommen ist, kann der Strom der Kunststoffvorformlinge gestoppt werden. Anschließend werden bevorzugt nur ein paar Kunststoffvorformlinge in den Ofen eingefahren, um die passenden Prozessparameter und/oder Heizparameter zu finden. Sobald das System stabil ist, wird die Produktion wieder angefahren.

Vorteilhaft werden die Kunststoffvorformlinge direkt von einer Spritzgussmaschine an den Ofen gefördert. Zu diesem Zweck ist bevorzugt eine intelligente Einbindung der Transporteinrichtungen in die gesamte Vorrichtung vorgesehen.

Bevorzugt weist die Vorrichtung wenigstens eine Inspektionseinrichtung auf, welche dazu geeignet und bestimmt ist, eine Charge an Kunststoffvorformlingen zu identifizieren. Dabei kann diese Inspektionseinrichtung beispielsweise eine Bildaufnahmeeinrichtung aufweisen, welche ein oder mehrere Bilder der transportierten Kunststoffvorformlinge aufnimmt. Bevorzugt können die Kunststoffvorformlinge anhand dieser Bilder (zumindest hinsichtlich ihrer Gattung) identifiziert werden.

Bevorzugt weist die Vorrichtung mehrere solcher Inspektionseinrichtungen auf.

Weiterhin wäre es denkbar, dass das Bilden der Lücken in dem Strom der Kunststoffvorformlinge nicht erst während dem Transport auf den Transporteinrichtungen erfolgt, sondern schon beim Zuführen der Vorformlinge in die Vorrichtung. Dabei werden die Vorformlinge einer ersten Gattung auf die erste Transporteinrichtung gekippt und anschließend mit einem bestimmten Abstand die Vorformlinge der zweiten Gattung. Dabei ist es möglich, dass die Kunststoffvorformlinge nicht erst in die Aufnahmeeinrichtung geschüttet, sondert direkt aus dem Oktabin auf Transportbänder bzw. Transporteinrichtungen.

Weitere Vorteile und Ausführungsformen ergeben sich aus den beigefügten Zeichnungen:
Darin zeigen:
- Fig. 1: eine erste Darstellung zur Veranschaulichung eines erfindungsgemäßen Verfahrens;
- Fig. 2: ein zweiter Verfahrensschritt des erfindungsgemäßen Verfahrens;
- Fig. 3: ein dritter Verfahrensschritt des erfindungsgemäßen Verfahrens;
- Fig. 4: ein vierter Verfahrensschritt des erfindungsgemäßen Verfahrens;
- Fig. 5: ein fünfter Verfahrensschritt des erfindungsgemäßen Verfahrens;
- Fig. 6: ein sechster Verfahrensschritt des erfindungsgemäßen Verfahrens; und
- Fig. 7: ein siebter Verfahrensschritt des erfindungsgemäßen Verfahrens.

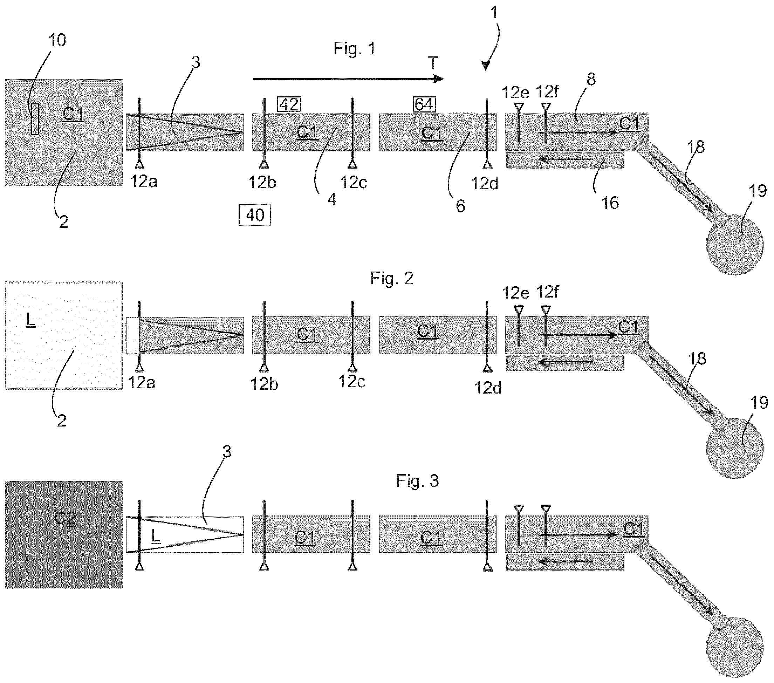

Fig. 1 zeigt in der Gesamtheit eine erfindungsgemäße Vorrichtung 1 zum Behandeln von Kunststoffvorformlingen 10 und insbesondere zum Transportieren von Kunststoffvorformlingen 10. Dabei kennzeichnet das Bezugszeichen 2 eine Aufnahmeeinrichtung, welche zur (insbesondere ungeordneten) Aufnahme einer Vielzahl von Kunststoffvorformlingen 10 geeignet und bestimmt ist.

Diese Kunststoffvorformlinge 10 weisen bevorzugt einen Grundkörper auf, sowie einen Gewindebereich. Dieser Gewindebereich weist dabei bevorzugt ein Gewinde und insbesondere ein Außengewinde auf, auf welches ein Verschluss aufschraubbar ist. Daneben weisen diese Kunststoffvorformlinge bevorzugt weiterhin einen Tragring auf, mittels dessen sie bevorzugt transportiert werden. Dieser Tragring ragt in radialer Richtung über den Grundkörper der Kunststoffvorformlinge hinaus. Bevorzugt dienen die Kunststoffvorformlinge zur Herstellung von Kunststoffbehältnissen und insbesondere von Kunststoffflaschen.

Das Bezugszeichen 4 kennzeichnet eine erste Transporteinrichtung, welche die Kunststoffvorformlinge abschnittsweise in einer Transportrichtung T transportiert wobei hier die Kunststoffvorformlinge bevorzugt geradlinig transportiert werden.

Die Kunststoffvorformlinge werden bevorzugt ausgehend von der Aufbewahrungseinrichtung 2 mittels eine Überführungseinrichtung 3 zu der ersten Transporteinrichtung 4 überführt. Insbesondere handelt es sich bei der Überführungseinrichtung 3 um einen Vertikalförderer, der bevorzugt auch dazu geeignet und bestimmt ist, Kunststoffvorformlinge auch in vertikaler Richtung anzuheben. Die Überführungseinrichtung, bei der es sich insbesondere um einen Vertikalförderer bzw. der Hochförderer handelt, fördert die Vorformlinge auf ein höher gelegenes Niveau, damit bei einer späteren Zuführung zum weiter unten liegenden Ofen ein Staudruck mittels Schwerkraft erzeugt wird.

Das Bezugszeichen 6 kennzeichnet eine zweite Transporteinrichtung, welche sich hier an die erste Transporteinrichtung 4 anschließt und welche ebenfalls die Kunststoffvorformlinge 10 in der Transportrichtung T transportiert.

Das Bezugszeichen 42 kennzeichnet eine Antriebseinrichtung der ersten Transporteinrichtung und das Bezugszeichen 64 kennzeichnet eine Antriebseinrichtung der zweiten Transporteinrichtung. Diese beiden Antriebseinrichtungen 42 und 64 sind bevorzugt unabhängig voneinander steuerbar, so dass es beispielsweise möglich, dass eine der beiden Transporteinrichtungen die Kunststoffvorformlinge fortbewegt, während die andere Transporteinrichtung steht.

Das Bezugszeichen 8 kennzeichnet eine Sortiereinrichtung welche dazu geeignet und bestimmt ist, die Kunststoffvorformlinge zu sortieren und insbesondere dazu, sie einheitlich auszurichten.

Das Bezugszeichen 16 kennzeichnet eine Rückführungseinrichtung, welche dazu dient, beispielsweise falsch sortierte und insbesondere falsch orientierte Kunststoffvorformlinge wieder zurückzuführen insbesondere an eine Position stromaufwärts der Sortiereinrichtung 8.

Das Bezugszeichen 18 kennzeichnet eine Fördereinrichtung, welche dazu dient, die Kunststoffvorformlinge insbesondere hintereinander zu einer Eintakteinrichtung wie etwa einem Eintaktstern 19 zu führen. An diesen Eintaktstern 19 schließt sich bevorzugt eine (nicht gezeigte) Erwärmungseinrichtung zum Erwärmen der Kunststoffvorformlinge an. Hierbei handelt es sich insbesondere um einen Infrarotofen oder einen Mikrowellenofen oder Laserofen.

Die Bezugszeichen 12a - 12f kennzeichnen eine Vielzahl von Erfassungseinrichtungen, welche etwa einen Belegungszustand bzw. Beladungszustand in den einzelnen Transportabschnitten des Transportpfads mit Kunststoffvorformlingen erfassen können.

Bevorzugt ist dabei den einzelnen Einheiten der Vorrichtung mindestens je eine derartige Erfassungseinrichtung zugeordnet. Bevorzugt sind auch wenigstens einer Transporteinrichtung und insbesondere der ersten Transporteinrichtung 4 zwei derartige Erfassungseinrichtungen (12b und 12c) zugeordnet.

Bevorzugt handelt es sich bei wenigstens einer dieser Transporteinrichtung und insbesondere bei mehreren dieser Transporteinrichtungen um Lichtschranken.

Das Bezugszeichen 40 kennzeichnet eine Steuerungseinrichtung zum Steuern der Vorrichtung und insbesondere auch zum Steuern der Transporteinrichtungen 4 und 6 und insbesondere deren Antriebseinrichtungen 42 und 64. Bevorzugt werden der Steuerungseinrichtung auch Signale und/oder Messwerte der einzelnen Erfassungseinrichtungen 12a - 12f zugeführt und die Steuerungseinrichtung steuert die Transporteinrichtungen 4, 6 auch unter Berücksichtigung dieser Signale, insbesondere um einen Chargenwechsel durchzuführen.

Die nachfolgenden Figuren 2 - 9 beschreiben nun das Verfahren zur Durchführung eines Chargenwechsels. Bei der in Fig. 1 gezeigten Situation ist die Vorrichtung noch vollständig mit Kunststoffvorformlingen einer ersten Charge C1 (hellerer Grauton) bestückt.

Bei der in Fig. 2 gezeigten Situation ist die Aufnahmeeinrichtung 2 leergefahren (L), es befinden sich also in dieser Aufnahmeeinrichtung 2 keine Kunststoffvorformlinge mehr. In allen übrigen Teilen der Vorrichtung befinden sich noch die Kunststoffvorformlinge der Charge C1.

Bei der in Fig. 3 gezeigten Situation wurden in die Aufnahmeeinrichtung Kunststoffvorformlinge einer zweiten Charge C2 eingefüllt (dunklerer Grauton). Weiterhin wurde in diesem Zustand die Überführungseinrichtung 3 (bei der es sich insbesondere um einen Vertikalförderer handelt) leergefahren (L). in den übrigen Teilen der Vorrichtung befinden sich noch die Kunststoffvorformlinge der ersten Charge C1.

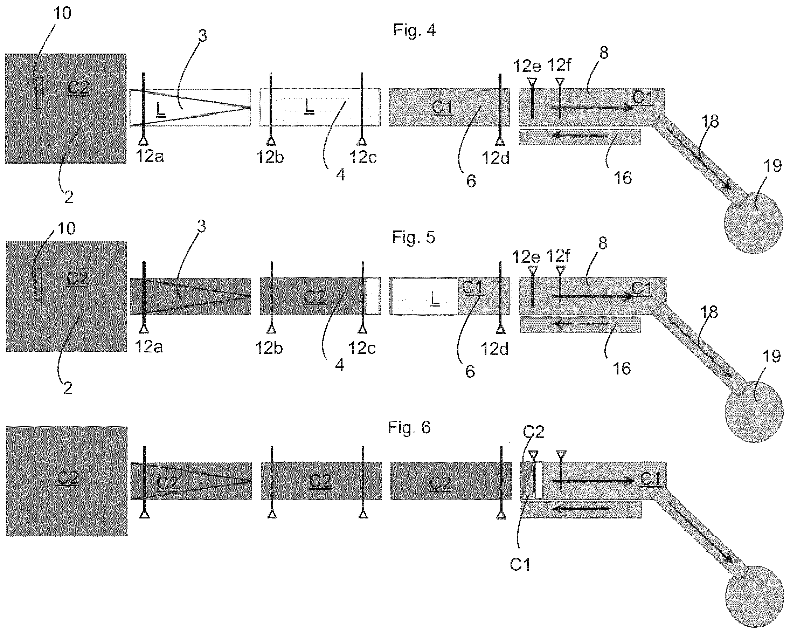

Bei der in Fig. 4 gezeigten Situation werden in der Aufnahmeeinrichtung 2 noch die Kunststoffvorformlinge der zweiten Charge C2 zurückgehalten und auch die erste Transporteinrichtung 4 ist leergefahren. In der zweiten Transporteinrichtung 6 sowie den weiteren Einrichtungen der Vorrichtung befinden sich noch die Kunststoffvorformlinge der ersten Charge C1. Auf diese Weise wurde eine Lücke zwischen den Kunststoffvorformlingen der ersten Charge C1 und den Kunststoffvorformlingen der zweiten Charge C2 gebildet.

Bei der in Fig. 5 gezeigten Situation wurde nun auch der Transport der Kunststoffvorformlinge der zweiten Charge C2 freigegeben und diese befinden sich nun auch in der Überführungseinrichtung 3 sowie in einem Bereich der ersten Transporteinrichtung. Ein Bereich der ersten Transporteinrichtung 4 sowie ein Bereich der zweiten Transporteinrichtung 6 ist leer bzw. hier befindet sich eine Lücke.

Die übrigen Bereiche der zweiten Transporteinrichtung 6 sowie die nachfolgenden Einrichtungen enthalten noch die Kunststoffvorformlinge der ersten Charge C1. Die Lücke zwischen der ersten Charge C1 und der zweiten Charge C2 wurde jedoch wieder verkleinert, was insbesondere durch die unabhängige Ansteuerung der beiden Transporteinrichtungen 4 und 6 möglich ist.

Bei der in Fig. 6 gezeigten Situation befinden sich nun auch in der zweiten Transporteinrichtung 6 ausschließlich Kunststoffvorformlinge der zweiten Charge C2. Die Lücke zwischen den beiden Chargen C1, C2 wurde weiter verkleinert.

Innerhalb der Sortiereinrichtung 8 tritt ein geringer Bereich auf, in welchem sich sowohl Kunststoffvorformlinge der ersten Charge C1 als auch Kunststoffvorformlinge der zweiten Charge C2 befinden können.

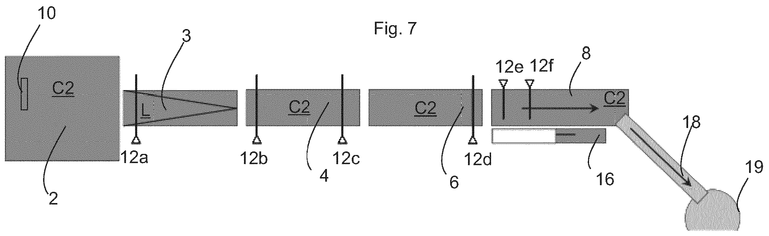

Bei der in Fig. 7 gezeigten Situation ist nunmehr auch die Sortiereinrichtung 8 vollständig mit Kunststoffvorformlingen der Charge C2 bestückt. Eine Lücke tritt in der Rückführungseinrichtung 12 nun nicht mehr auf. In den der Sortiereinrichtung 8 nachfolgenden Einrichtungen 18, 19 befinden sich noch die Kunststoffvorformlinge der ersten Charge C1.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Behandeln von Kunststoffvorformlingen (10) mit einer Aufnahmeeinrichtung (2), welche zur Aufnahme einer Vielzahl von Kunststoffvorformlingen (10) geeignet und bestimmt ist, mit einer ersten Transporteinrichtung (4), welche die Kunststoffvorformlinge von der Aufnahmeeinrichtung (2) abführt und in einer vorgegebenen Transportrichtung transportiert und mit einer zweiten Transporteinrichtung (6), welche in der Transportrichtung nach der ersten Transporteinrichtung (4) angeordnet ist und welche dazu geeignet und bestimmt ist, die Kunststoffvorformlinge (10) in der Transportrichtung zu transportieren,
**dadurch gekennzeichnet, dass**
der Transport der Kunststoffvorformlinge (10) durch die erste Transporteinrichtung (4) unabhängig von dem Transport der Kunststoffvorformlinge (10) durch die zweite Transporteinrichtung (6) steuerbar ist.

2. Vorrichtung (1) nach Anspruch 1,
**dadurch gekennzeichnet, dass**
die Aufnahmeeinrichtung (2) ein Reservoir zum Aufnehmen von Kunststoffvorformlingen oder eine Transporteinheit zum Transportieren von Kunststoffvorformlingen ist.

3. Vorrichtung (1) nach wenigstens einem der vorangegangenen Ansprüche,
**dadurch gekennzeichnet, dass**
wenigstens eine der Transporteinrichtungen die Kunststoffvorformlinge geradlinig transportiert.

4. Vorrichtung (1) nach wenigstens einem der vorangegangenen Ansprüche,
**dadurch gekennzeichnet, dass**
die Vorrichtung (1) eine Sortiereinrichtung (8) aufweist, welche dazu geeignet und bestimmt ist, die ihr zugeführten Kunststoffvorformlinge zu sortieren und insbesondere gleichartig auszurichten.

5. Vorrichtung (1) nach dem vorangegangenen Anspruch,
**dadurch gekennzeichnet, dass**
diese Sortiereinrichtung (8) in der Transportrichtung der Kunststoffvorformlinge wenigstens nach der ersten Transporteinrichtung (4) und bevorzugt nach der zweiten Transporteinrichtung (6) angeordnet ist.

6. Vorrichtung (1) nach wenigstens einem der vorangegangenen Ansprüche 4 - 5, **dadurch gekennzeichnet, dass**
die Sortiereinrichtung zwei parallel zueinander angeordnete Rollen aufweist, welche sich in der Transportrichtung erstrecken und zwischen diesen Rollen ein Spalt ausgebildet ist, durch welchen ein Grundkörper der Kunststoffvorformlinge treten kann, nicht aber ein Mündungsbereich der Kunststoffvorformlinge.

7. Vorrichtung (1) nach wenigstens einem der vorangegangenen Ansprüche 4 - 5, **dadurch gekennzeichnet**, das
die Vorrichtung (1) wenigstens eine Erfassungseinrichtung (12) aufweist, welche dazu geeignet und bestimmt ist, wenigstens eine Eigenschaft zu erfassen, welche für von wenigstens einer Transporteinrichtung (4, 6) transportierte Kunststoffvorformlinge charakteristisch ist, wobei diese Eigenschaft bevorzugt aus einer Gruppe von Eigenschaften ausgewählt ist, welche eine Orientierung der Kunststoffvorformlinge, eine Anzahl der transportierten Kunststoffvorformlinge, eine Dichte der transportierten Kunststoffvorformlinge, Abstände zwischen transportierten Kunststoffvorformlingen und dergleichen enthält.

8. Vorrichtung nach dem vorangegangenen Anspruch,
**dadurch gekennzeichnet, dass**
jeder Transporteinrichtung (4, 6) mindestens eine Erfassungseinrichtung zugeordnet ist.

9. Vorrichtung nach wenigstens einem der vorangegangenen Ansprüche 7 - 8,
**dadurch gekennzeichnet, dass**
wenigstens eine Erfassungseinrichtung (12) eine Lichtschrankeneinrichtung (12) ist.

10. Vorrichtung (1) nach wenigstens einem der vorangegangenen Ansprüche,
**dadurch gekennzeichnet, dass**
die Vorrichtung und insbesondere die Sortiereinrichtung (8) eine Rückführungseinrichtung (16) aufweist, welche dazu geeignet und bestimmt ist, wenigstens einen Anteil der Kunststoffvorformlinge (10) und insbesondere von einer Ausschleuseeinrichtung ausgeschleuste Kunststoffvorformlinge dem Transportpfad der Kunststoffvorformlinge (10) stromaufwärts eines Entnahmepunktes wieder zuzuführen.

11. Vorrichtung (1) nach wenigstens einem der vorangegangenen Ansprüche 4 - 5,
**dadurch gekennzeichnet, dass**
die Vorrichtung (1) wenigstens eine Sensoreinrichtung (22) aufweist, welche dazu geeignet ist eine Gattung von Kunststoffvorformlingen zu identifizieren.

12. Verfahren zum Behandeln von Kunststoffvorformlingen (10) wobei eine Vielzahl von Kunststoffvorformlingen zu einer Aufnahmeeinrichtung (2) gebracht werden, welche zur Aufnahme einer Vielzahl von Kunststoffvorformlingen (10) geeignet und bestimmt ist, und wobei eine erste Transporteinrichtung (4) die Kunststoffvorformlinge abführt und in einer vorgegebenen Transportrichtung transportiert und wobei eine zweite Transporteinrichtung (6), welche in der Transportrichtung nach der ersten Transporteinrichtung (4) angeordnet ist die Kunststoffvorformlinge (10) in der Transportrichtung transportiert,
**dadurch gekennzeichnet, dass**
der Transport der Kunststoffvorformlinge (10) durch die erste Transporteinrichtung (4) wenigstens zeitweise unabhängig von dem Transport der Kunststoffvorformlinge (10) durch die zweite Transporteinrichtung (6) gesteuert wird.

13. Verfahren nach dem vorangegangenen Anspruch,
**dadurch gekennzeichnet, dass**
die Kunststoffvorformlinge (10) sortiert werden und insbesondere gleichartig ausgerichtet werden.

14. Verfahren nach wenigstens einem der vorangegangenen Ansprüche,
**dadurch gekennzeichnet, dass**
wenigstens teilweise eine Rückführung von Kunststoffvorformlingen erfolgt.

15. Verfahren nach wenigstens einem der vorangegangenen Ansprüche,
**dadurch gekennzeichnet, dass**
eine Lücke zwischen den Kunststoffvorformlingen einer ersten Gattung und den Kunststoffvorformlingen einer zweiten Gattung gebildet wird.
